# EUROPÄISCHE PATENTSCHRIFT

(11) **EP 3 835 151 B1**
(45) Veröffentlichungstag und Bekanntmachung des Hinweises auf die Patenterteilung: **06.12.2023**
(21) Anmeldenummer: 20203743.8
(22) Anmeldetag: 26.10.2020
(51) Int. Cl.: B60T 8/88

(54) **VERFAHREN ZUR STEUERUNG EINES BREMSSYSTEMS EINES FAHRZEUGS**
METHOD FOR CONTROLLING A BRAKE SYSTEM OF A VEHICLE
PROCÉDÉ DE COMMANDE D'UN SYSTÈME DE FREINAGE D'UN VÉHICULE

(30) Priorität: 11.12.2019 DE 102019219328
(43) Veröffentlichungstag der Anmeldung: 16.06.2021
(73) Patentinhaber: Continental Automotive Technologies GmbH, 30165 Hannover (DE)
(72) Erfinder: Diehl, Marius, 60488 Frankfurt am Main (DE); Borneis, Joachim, 60488 Frankfurt am Main (DE); Brzezina, Jan, 60488 Frankfurt am Main (DE); Cornils, Arne, 60488 Frankfurt am Main (DE)
(74) Vertreter: Continental Corporation

(56) Entgegenhaltungen:
- DE-A1- 19 511 161
- DE-A1-102007 046 692
- DE-A1-102014 209 162
- DE-A1-102017 012 110
- US-A1- 2007 050 107
- US-A1- 2010 013 296
- US-A1- 2016 272 180

## Beschreibung

Die Erfindung betrifft ein Verfahren zur Steuerung eines Bremssystems eines Fahrzeugs.

In modernen Fahrzeugen werden Fahrzeugführer durch eine Vielzahl von Fahrassistenzfunktion beim Führen des Fahrzeugs unterstützt. Bekannte Beispiele für derartige Fahrassistenzfunktion sind Antiblockiersysteme oder Stabilitätsprogramme, die ein durch den Fahrzeugführer angefordertes Verzögerungs- oder Beschleunigungsverhalten des Fahrzeugs so regeln, dass die Fahrstabilität des Fahrzeugs stets gewährleistet bleibt.

Viele dieser Fahrassistenzfunktionen, insbesondere Funktionen, die sich auf eine Regelung eines Bremsverhaltens des Fahrzeugs beziehen (Bremsregelfunktionen), stützen sich auf eine Überwachung der Drehzahlen der Fahrzeugräder (Raddrehzahlen). So wird beispielsweise bei Antiblockiersystemen üblicherweise die Bremskraft an einem Fahrzeugrad reduziert, sobald die überwachten Raddrehzahlen darauf hinweisen, dass das Fahrzeugrad einen zu großen Schlupf aufweist.

Bei einem Ausfall eines oder mehrerer Raddrehzahlsensoren ist üblicherweise vorgesehen, dass derartige Bremsregelfunktionen deaktiviert werden, da eine zuverlässige Regelung bei Fehlen der entsprechenden Raddrehzahlinformationen nicht oder nur eingeschränkt möglich ist.

Hierzu beschreibt die DE 10 2014 209 162 A1 beispielhaft ein Verfahren zur Steuerung einer Bremsanlage eines Kraftfahrzeuges mit zwei Bremskreisen und Raddrehzahlsensoren, bei welchem das Vorliegen einer Gefahrensituation des Kraftfahrzeuges, insbesondere das Auftreten einer Kollision, überwacht wird und bei einer erkannten Gefahrensituation, insbesondere Kollision, ein fahrerunabhängiger Bremseingriff durchgeführt wird. Dazu ist vorgesehen, dass bei Erkennen des Fehlens des Signals wenigstens eines Raddrehzahlsensors und/oder der Momentangeschwindigkeit des Kraftfahrzeuges nach Auftreten der Gefahrensituation mittels des letzten bekannten Momentangeschwindigkeitswertes und eines vorgegebenen oder bestimmten Verzögerungswertes eine Stillstandszeit bis zum Stillstand des Kraftfahrzeuges berechnet wird und für eine Zeitspanne, die der Stillstandszeit entspricht, der Bremseingriff mit der vorgegebenen Verzögerung durchgeführt wird.

Die DE 195 11 161 A1 und DE 10 2007 046 692 A1 offenbaren Antiblockiersystemen, die auch im Falle eines Ausfalls eines Raddrehzahlsensors die Antiblockierregelung bis zum Ende der Bremsung fortführen.

Wird ferner zum Zeitpunkt des Ausfalls eine Bremsregelfunktion durchgeführt, ist häufig vorgesehen, dass zumindest das vom Ausfall betroffene Rad sofort aus der Bremsregelfunktion ausgenommen wird. Dabei kann entweder vorgesehen sein, dass eine Bremsanforderung ungeregelt an das betroffene Rad weitergegeben wird, oder das betroffene Rad wird nicht mehr zur Verzögerung des Fahrzeugs angesteuert. Im ersten Fall kann ein Blockieren des betroffenen Rades nicht mehr effektiv verhindert werden, während im zweiten Fall die verfügbare Verzögerungsleistung deutlich reduziert wird.

Das zuvor beschriebene Vorgehen kann insbesondere problematisch sein, wenn der Ausfall eines Raddrehzahlsensors auf einen Unfall des Fahrzeugs zurückzuführen ist. In diesem Fall wären nach dem Unfall Sicherheitsroutinen, die auf derartigen Bremsregelfunktionen aufbauen und die beispielsweise ein automatisches Bremsen nach dem Unfall umsetzen sollen (Post Crash Braking), nicht mehr verfügbar.

Demgegenüber liegt der vorliegenden Erfindung die Aufgabe zugrunde, ein Verfahren zur Steuerung eines Bremssystems eines Fahrzeugs zu schaffen, das die vorstehend beschriebenen Nachteile überwindet und insbesondere die Verfügbarkeit und die Wirksamkeit von Bremsregelfunktionen bei einem Ausfall von entsprechenden Sensormitteln zur Bestimmung von Raddrehzahlen verbessert. Diese Aufgabe wird mit dem Verfahren gemäß Anspruch 1 gelöst. Vorteilhafte Ausgestaltungen der Erfindung sind Gegenstand der abhängigen Ansprüche.

Die Erfindung betrifft ein Verfahren zur Steuerung eines Bremssystems eines Fahrzeugs, wobei das Bremssystem je Fahrzeugrad wenigstens eine Radbremse aufweist. Für die Radbremsen sind Sensormittel zur Bestimmung von Raddrehzahlen der Fahrzeugräder vorgesehen. Das Bremssystem ist dabei dazu ausgebildet, Bremsregelfunktionen auf Grundlage der durch die Sensormittel bestimmten Raddrehzahlen auszuführen. Das Verfahren weist dabei das Erkennen eines Ausfalls der Sensormittel für wenigstens eines der Fahrzeugräder und das Prüfen, ob zum Zeitpunkt des Ausfalls eine Bremsregelfunktion durch das Bremssystem ausgeführt wird, auf. Wenn zum Zeitpunkt des Ausfalls eine Bremsregelfunktion durch das Bremssystem ausgeführt wird, weist das Verfahren das Fortführen der Bremsregelfunktion und das Deaktivieren der Bremsregelfunktion, wenn die Ausführung der Bremsregelfunktion abgeschlossen ist, auf. Wenn zum Zeitpunkt des Ausfalls keine Bremsregelfunktion durch das Bremssystem ausgeführt wird, weist das Verfahren das Prüfen, ob innerhalb einer definierten Zeitspanne nach dem Zeitpunkt des Ausfalls eine Bremsregelfunktion ausgelöst wird, auf. Wenn innerhalb der definierten Zeitspanne nach dem Zeitpunkt des Ausfalls eine Bremsregelfunktion ausgelöst wird, sieht das Verfahren das Ausführen der Bremsregelfunktion vor. Ferner weist das Verfahren das Deaktivieren der Bremsenregelfunktion vor, wenn die Ausführung der Bremsregelfunktion abgeschlossen und die Zeitspanne abgelaufen ist, oder wenn innerhalb der definierten Zeitspanne nach dem Zeitpunkt des Ausfalls keine Bremsregelfunktion ausgelöst wurde.

Unter einer "Bremsregelfunktion" ist dabei grundsätzlich eine Funktion zu verstehen, die ein durch die Radbremsen des Fahrzeugs erzeugtes Bremsmoment infolge einer Bremsanforderung in irgendeiner Form steuert oder regelt. Dabei kann die entsprechende Bremsanforderung sowohl durch einen Fahrzeugführer ausgelöst werden, als auch durch eine (teil)autonome Fahrfunktion, wie beispielsweise ein Autopilot oder Notbremsassistent. Beispielsweise kann es sich bei der Bremsregelfunktion um eine Funktion handeln, die nach Erkennen eines Unfalls des Fahrzeugs das Fahrzeug automatisch und vorzugsweise maximal möglichen Verzögerung zum Stillstand bringt. Eine solche Funktion kann dabei auch auf weitere Bremsregelfunktionen zurückgreifen, die beispielsweise eine maximale Verzögerung bei gleichbleibender Kontrollierbarkeit des Fahrzeugs gewährleisten sollen.

Das erfindungsgemäße "Deaktivieren" einer Bremsregelfunktion bedeutet dabei, dass ab dem Zeitpunkt der Deaktivierung die entsprechende Bremsregelfunktion nicht mehr ausgelöst werden kann, also nicht mehr zur Verfügung steht. Dabei kann beispielsweise vorgesehen sein, dass die Deaktivierung so lange Bestand hat, bis durch einen entsprechenden Steuerbefehl die Bremsregelfunktion wieder aktiviert wird. Ein solcher Steuerbefehl könnte beispielsweise durch einen Mechaniker ausgelöst werden, sobald fehlerhafte Sensormittel ausgetauscht oder repariert wurden.

Das erfindungsgemäße Verfahren hat dabei den Vorteil, dass trotz eines Ausfalls von Sensormitteln zur Bestimmung der Raddrehzahl die betroffenen Bremsregelfunktionen weiterhin zumindest für eine bestimmte Zeitspanne weiterhin verfügbar bleiben. Folglich kann beispielsweise nach einem Unfall noch für eine kurze Zeit eine Bremsregelfunktion, wie beispielsweise eine automatische Verzögerung des Fahrzeugs bis zu dessen Stillstand umgesetzt werden. Ferner steht beispielsweise nach einem Ausfall der betroffenen Sensormittel im laufenden (teil)automatisierten Fahrbetrieb ausreichend Zeit zur Verfügung, um den Fahrzeugführer über den Ausfall in Kenntnis zu setzen und eine sichere Übergabe der Kontrolle über das Fahrzeug an den Fahrzeugführer durchzuführen.

Gleichzeitig ist vorgesehen, dass zum Zeitpunkt des Ausfalls bereits ausgeführte Bremsenregelfunktionen weiterhin ausgeführt werden und eine Deaktivierung der entsprechenden Bremsenregelfunktion erst erfolgt, wenn laufende Ausführung beendet wurde.

Dabei ist nach einer weiteren Ausführungsform vorgesehen, dass es sich bei der Bremsenregelfunktion um eine Antiblockierregelung handelt, wobei nach Erkennen eines Ausfalls der Sensormittel für wenigstens eines der Fahrzeugräder beim Ausführen der Antiblockierregelung das Fahrzeugrad, für das der Ausfall der Sensormittel erkannt wurde, mit einem vordefinierten Verzögerungsmoment beaufschlagt wird. Unter einem "Verzögerungsmoment" ist dabei ein auf das Fahrzeugrad durch die Radbremse ausgeübtes Drehmoment zu verstehen, was zu einer Verlangsamung der Rotation des Fahrzeugrades führt. Das Verzögerungsmoment ist dabei vorzugsweise so gewählt, dass unter gegebenen Bedingungen zwar eine starke Verzögerung erreicht wird, jedoch kein Blockieren des verzögerten Rades zu befürchten ist. Beispielsweise kann das Verzögerungsmoment so gewählt sein, dass bei einer Beaufschlagung aller Radbremsen mit entsprechenden Verzögerungsmomenten unter Normalbedingungen, also beispielsweise bei trockener, asphaltierter Straße, eine Verzögerung des Fahrzeugs von 0,7g erreicht würde. Auf diese Weise wird gewährleistet, dass trotz eines Ausfalls der entsprechenden Sensormittel auch weiterhin ein gewisser Beitrag zur Gesamtverzögerung des Fahrzeugs durch die Radbremse jenes Rades geleistet wird, für das der Ausfall der Sensormittel erkannt wurde.

Um bei der Ausführung einer Bremsregelfunktion nach Erkennen eines Ausfalls der Sensormittel für wenigstens eines der Fahrzeugräder weiterhin die Fahrstabilität des Fahrzeugs zu gewährleisten, ist nach einer weiteren Ausführungsform vorgesehen, dass bei erkanntem Ausfall der Sensormittel für wenigstens eines der Fahrzeugräder bei Ausführen der Bremsregelfunktion der Gierwinkel des Fahrzeugs überwacht wird, wobei bei Erkennung einer Änderung des Gierwinkels, der nicht einem Lenkbefehl eines Fahrzeugführers entspricht, die Radbremse des Fahrzeugrades, für das der Ausfall der Sensormittel erkannt wurde, zumindest teilweise gelöst wird.

Dieser Ansatz beruht auf der Überlegung, dass bei einem einseitigen Überbremsen der Radbremsen, also einem erhöhten Schlupf an wenigstens einem der Räder einer Fahrzeugseite ein Giermoment entsteht, das durch eine entsprechende Sensorik erkannt werden kann. Sobald dabei ein Giermoment erkannt wird, das nicht mit einem Lenkbefehl des Fahrzeugführers übereinstimmt, ist von einem Blockieren eines der Räder infolge eines zu starken Verzögerungsmoments auszugehen. Dabei kann vorgesehen sein, dass bei Erkennen eines solchen Giermoments eine von dem Ausfall der Sensormittel betroffenes Rad vollständig entbremst wird, also die entsprechende Radbremse vollständig gelöst wird. Alternativ kann auch das Verzögerungsmoment an dem betroffenen Rad langsam reduziert werden, bis die Änderung des Gierwinkels wieder einem Lenkbefehl des Fahrzeugführers folgt.

Nach einer weiteren Ausführungsform ist ferner vorgesehen, dass die Sensormittel wenigstens einen Raddrehzahlsensor pro Fahrzeugrad umfassen. Ferner kann auch vorgesehen sein, dass die Sensormittel redundant ausgelegt sind, also die Raddrehzahl jedes Fahrzeugrades durch wenigstens zwei Raddrehzahlsensoren überwacht wird.

Nach einer weiteren Ausführungsform ist vorgesehen, dass die Dauer der definierten Zeitspanne zwischen 1 und 30 Sekunden, insbesondere zwischen 1 und 5 Sekunden, insbesondere 2,5 Sekunden beträgt.

Zur Information Fahrzeugführers über einen erkannten Ausfall der Sensormittel ist nach einer weiteren Ausführungsform vorgesehen, dass bei erkanntem Ausfall der Sensormittel für wenigstens eines der Fahrzeugräder eine optische und/oder akustische Warnung an einen Fahrzeugführer ausgegeben wird. Insbesondere kann durch Aktivierung einer entsprechenden Leuchte in einem Armaturenbrett des Fahrzeugs auf einen erkannten Ausfall hingewiesen werden.

Im Folgenden werden bevorzugte Ausgestaltungen der Erfindung anhand der Zeichnungen näher erläutert. Dabei zeigen:
- Figur 1: ein Flussdiagramm einer beispielhaften Ausgestaltung des Verfahrens,
- Figur 2: schematische Diagramme unterschiedlicher Parameter eines Fahrzeugs während einer beispielhaften Umsetzung des Verfahrens.

Im Folgenden werden einander ähnliche oder identische Merkmale mit denselben Bezugszeichen gekennzeichnet.

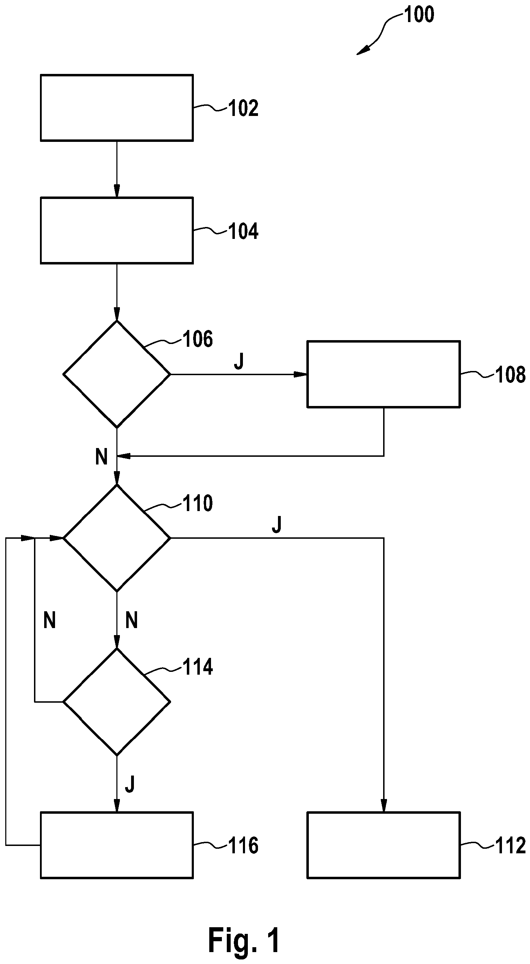

Die Figur 1 zeigt eine schematische Darstellung einer beispielhaften Ausgestaltung des erfindungsgemäßen Verfahrens 100. Zur Implementierung des Verfahrens 100 ist dabei ein Bremssystem eines Fahrzeugs vorgesehen, wobei das Bremssystem je Fahrzeugrad wenigstens eine Radbremse aufweist, wobei für die Radbremsen Sensormittel zur Bestimmung von Raddrehzahlen der Fahrzeugräder vorgesehen sind, und wobei das Bremssystem dazu ausgebildet ist, Bremsregelfunktionen auf Grundlage der durch die Sensormittel bestimmten Raddrehzahlen auszuführen. Insbesondere kann dabei jedes Fahrzeugrad über einen radindividuellen Raddrehzahlsensor verfügen.

Dabei wird in einem ersten Verfahrensschritt 102 ein Ausfall der Sensormittel des Fahrzeugs für wenigstens eines der Fahrzeugräder erkannt. Ein derartiger Ausfall kann beispielsweise in einem Unfall des Fahrzeugs, oder in üblichen Abnutzungserscheinungen von Fahrzeugelementen begründet sein. Neben einem Ausfall eines Raddrehzahlsensors an sich, kann auch die Unterbrechung einer Datenverbindung zwischen dem Raddrehzahlsensor und einem Bremsensteuergerät als Ausfall der Sensormittel interpretiert werden, da auch in diesem Fall die notwendigen Informationen hinsichtlich der Drehzahl des betroffenen Fahrzeugrades nicht mehr zur Verfügung stehen.

Nachdem in Schritt 102 der Ausfall der Sensormittel erkannt wurde, wird in Schritt 104 ein Timer gestartet, der eine vordefinierte Zeitspanne abmisst, beispielsweise eine Zeitspanne von 2,5 Sekunden.

Anschließend wird in Schritt 106 geprüft, ob zum Zeitpunkt des Ausfalls eine Bremsregelfunktion, wie beispielsweise eine Antiblockierregelung, ausgeführt wird. Ist dies der Fall, wird die Bremsregelfunktion in Schritt 108 fortgeführt, bis die Ausführung der Bremsregelfunktion abgeschlossen ist, also beispielsweise das Fahrzeug zum Stillstand gekommen ist, oder eine entsprechende Bremsanforderung nicht mehr vorliegt. Bei einer Antiblockierregelung kann dabei vorgesehen sein, dass das von dem Ausfall der Sensormittel betroffene Rad mit einem vordefinierten Verzögerungsmoment beaufschlagt wird, das beispielsweise eine Fahrzeugverzögerung von 0,7g entspricht.

Wird hingegen in Schritt 106 festgestellt, dass zum Zeitpunkt des Ausfalls keine Bremsregelfunktion ausgeführt wird, geht das Verfahren zu Schritt 110 über, in dem überprüft wird, ob der Timer abgelaufen, also die vordefinierte Zeitspanne verstrichen ist. Nach Abschluss der Ausführung der Bremsregelfunktion in Schritt 108 geht das Verfahren ebenfalls zu Schritt 110 über.

Wird in Schritt 110 festgestellt, dass der Timer bereits abgelaufen ist, wird in Schritt 112 die Bremsregelfunktion deaktiviert und das Verfahren endet an dieser Stelle. Zusätzlich kann eine optische und/oder akustische Warnung an einen Fahrzeugführer ausgegeben werden, die auf einen Ausfall der Sensormittel oder die Deaktivierung der Bremsregelfunktion hinweisen.

Wird hingegen in Schritt 110 festgestellt, dass der Timer noch nicht abgelaufen ist, wird anschließend in Schritt 114 geprüft, ob eine Bremsregelfunktion ausgelöst wurde. Eine Bremsregelfunktion kann dabei beispielsweise durch eine Betätigung der Fahrzeugbremse durch den Fahrzeugführer, oder durch eine (teil)autonome Fahrfunktion ausgelöst werden.

Wird hierbei festgestellt, dass keine Bremsregelfunktion ausgelöst wurde, springt das Verfahren zurück zu Schritt 110, sodass effektiv eine fortlaufende Überwachung auf die Aktivierung von Bremsregelfunktionen ausgeführt wird, solange der Timer nicht abgelaufen ist.

Wird in Schritt 114 hingegen festgestellt, dass eine Bremsregelfunktion ausgelöst wurde, wird anschließend in Schritt 116 die entsprechende Bremsregelfunktion ausgeführt. Wie zuvor bereits mit Bezug zu Schritt 108 ausgeführt wurde, wird die Ausführung der Bremsregelfunktion vorzugsweise so angepasst, dass die fehlenden Raddrehzahlinformationen des betroffenen Rades kompensiert werden. Sobald die Bremsregelfunktion aus Schritt 116 beendet wurde, springt das Verfahren wieder zurück zu Schritt 110, sodass weiterhin geprüft wird, ob der Timer abgelaufen, also die definierte Zeitspanne verstrichen ist.

Folglich wird mit dem beschriebenen Verfahren eine Bremsregelfunktion infolge eines Ausfalls der Sensormittel für wenigstens eines der Fahrzeugräder erst dann deaktiviert, wenn eine definierte Zeitspanne abgelaufen ist und keine Bremsregelfunktionen mehr aktiv sind.

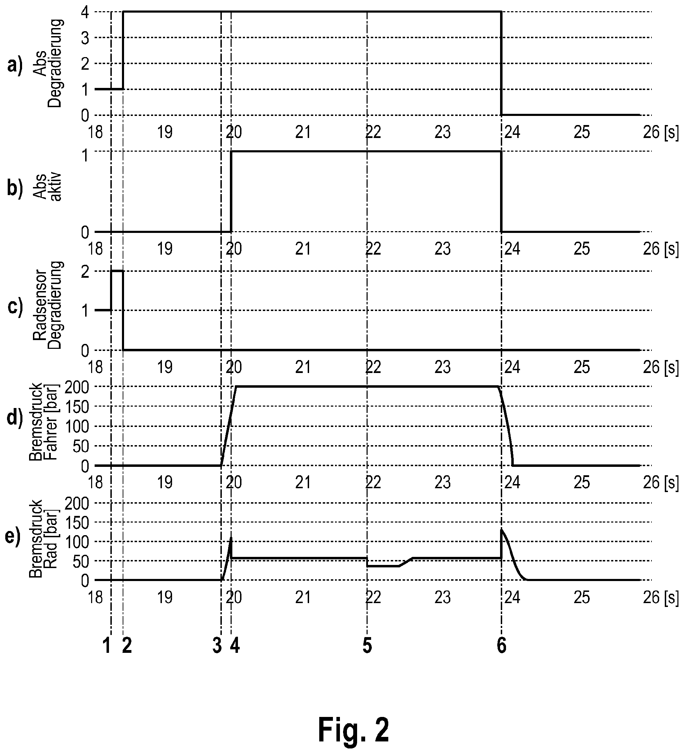

Die Figur 2 zeigt eine schematische Darstellung unterschiedlicher Parameter eines Fahrzeugs während einer beispielhaften Umsetzung des Verfahrens. Dabei wird beispielhaft eine Antiblockierregelung als Bremsregelfunktion betrachtet.

Dabei ist in dem obersten Diagramm a) der Degradierungszustand einer Antiblockierregelung dargestellt, der Auskunft darüber gibt, in welchem Betriebsmodus sich die Antiblockierregelung befindet. In dem zweiten Diagramm b) ist der Aktivierungszustand der Antiblockierregelung dargestellt, wobei der Zustand 1 eine Aktivierung der Antiblockierregelung anzeigt. In dem dritten Diagramm c) ist beispielhaft der Degradierungszustand eines Raddrehzahlsensors dargestellt, also eine Information über dessen Betriebsmodus. Das vierte Diagramm d) zeigt den Verlauf eines von einem Fahrzeugführer durch Betätigung der Bremse angeforderten Bremsdrucks, während das fünfte und unterste Diagramm e) den tatsächlich in einer Radbremse anliegenden Bremsdruck darstellt.

Die fünf Diagramme sind dabei über einer gemeinsamen, horizontalen Zeitachse aufgetragen.

Im Ausgangszustand liegt keine Bremsanforderung vor, sodass die Diagramme b) d) und e) bei dem Wert 0 beginnen. Der Degradierungszustand der Antiblockierregelung (Diagramm a)), wie auch der Degradierungszustand des Raddrehzahlsensors (Diagramm c)) ist im Normalzustand 1.

Zum Zeitpunkt 1 tritt nun ein Fehler des betrachteten Raddrehzahlsensors auf, der durch eine entsprechende Überwachungsroutine jedoch noch nicht bestätigt wurde. Folglich springt der Degradierungszustand des Raddrehzahlsensors auf einen entsprechenden Betriebsmodus 2. Die übrigen Parameter bleiben zunächst unverändert.

Zum Zeitpunkt 2 wurde der Fehler des Raddrehzahlsensors bestätigt, sodass der Degradierungszustand des Raddrehzahlsensors auf Stufe 0 springt, die anzeigt, dass der Raddrehzahlsensor nicht mehr verfügbar ist. Als Folge hiervon wird der Degradierungszustand der Antiblockierregelung (Diagramm a) in eine Rückfallbetriebsart geschaltet, dargestellt durch die Stufe 4. In dieser Rückfallbetriebsart kann beispielsweise vorgesehen sein, dass bei Aktivierung der Antiblockierregelung von dem Ausfall des Raddrehzahlsensors betroffene Rad mit einem vordefinierten Verzögerungsmoment beaufschlagt wird.

Gleichzeitig kann eine ABS-Warnlampe des Fahrzeugs aktiviert werden, die den Fahrzeugführer auf die vorliegende Fehlfunktion hinweist. Zu diesem Zeitpunkt wird ein Timer gestartet, der in dem vorliegenden Beispiel eine Zeitspanne von 2,5 Sekunden abmisst, nach der die Antiblockierregelung deaktiviert werden soll.

Innerhalb dieser Zeitspanne betätigt der Fahrzeugführer zum Zeitpunkt 3 die Fahrzeugbremse bzw. ein entsprechendes Bremspedal, sodass der durch den Fahrzeugführer angeforderte Bremsdruck in Diagramm d) ansteigt.

Zum Zeitpunkt 4 übersteigt der von dem Fahrzeugführer angeforderte Bremsdruck ein Blockierdruckniveau, bei dem ein Blockieren des Rades auftritt. Folglich wird zu diesem Zeitpunkt die Antiblockierregelung aktiviert, wie in Diagramm b) angezeigt. Da die Antiblockierregelung in der Rückfallbetriebsart ist (Diagramm a)), wird der Bremsdruck und mithin das Verzögerungsmoment an dem von dem Ausfall betroffenen Rad auf einen vordefinierten Wert limitiert.

Obwohl bei fortlaufender Antiblockierregelung die Zeitspanne von 2,5 Sekunden bereits verstrichen ist, wird die Deaktivierung der Antiblockierregelung verzögert, bis deren Ausführung abgeschlossen ist. Folglich bleibt die Antiblockierregelung zunächst weiterhin aktiv.

Dabei wird zum Zeitpunkt 5 beispielsweise anhand einer Überwachung des Gierwinkel des Fahrzeugs eine Instabilität des Fahrzeugs infolge des Bremsvorgangs festgestellt. Als Folge hiervon wird automatisch der Bremsdruck an dem betroffenen Rad abgesenkt, bis das Fahrzeug wieder stabil ist. Anschließend wird der Bremsdruck wieder auf den zuvor festgelegten Wert eingestellt.

Zum Zeitpunkt 6 hat der Fahrzeugführer die Bremse gelöst, sodass der angeforderte Bremsdruck abfällt. Dabei ist im Zeitpunkt 6 der Bremsdruck unter das Blockierdruckniveau gefallen, sodass die Antiblockierregelung deaktiviert wird (Stufe 0 in Diagramm b)). Da zu diesem Zeitpunkt die definierte Zeitspanne verstrichen ist und die Antiblockierregelung nicht mehr aktiv ist, wird die Degradierungsstufe der Antiblockierregelung auf den Modus 0 geschaltet, der anzeigt, dass die Funktion nicht mehr verfügbar, also deaktiviert ist.

## Patentansprüche

1. Verfahren zur Steuerung eines Bremssystem eines Fahrzeugs, wobei das Bremssystem je Fahrzeugrad wenigstens eine Radbremse aufweist, wobei für die Radbremsen Sensormittel zur Bestimmung von Raddrehzahlen der Fahrzeugräder vorgesehen sind, und wobei das Bremssystem dazu ausgebildet ist, Bremsregelfunktionen auf Grundlage der durch die Sensormittel bestimmten Raddrehzahlen auszuführen, wobei das Verfahren die folgenden Schritte aufweist:
• Erkennen (102) eines Ausfalls der Sensormittel für wenigstens eines der Fahrzeugräder,
• Prüfen (106), ob zum Zeitpunkt des Ausfalls eine Bremsregelfunktion durch das Bremssystem ausgeführt wird,
• Wenn zum Zeitpunkt des Ausfalls eine Bremsregelfunktion durch das Bremssystem ausgeführt wird, Fortführen (108) der Bremsregelfunktion und Deaktivieren (112) der Bremsregelfunktion, wenn die Ausführung der Bremsregelfunktion abgeschlossen ist,
• Wenn zum Zeitpunkt des Ausfalls keine Bremsregelfunktion durch das Bremssystem ausgeführt wird, Prüfen (114), ob innerhalb einer definierten Zeitspanne nach dem Zeitpunkt des Ausfalls eine Bremsregelfunktion ausgelöst wird,
• Wenn innerhalb der definierten Zeitspanne nach dem Zeitpunkt des Ausfalls eine Bremsregelfunktion ausgelöst wird, Ausführen (116) der Bremsregelfunktion und
• Deaktivieren (112) der Bremsenregelfunktion, wenn die Ausführung der Bremsregelfunktion abgeschlossen und die Zeitspanne abgelaufen ist, oder wenn innerhalb der definierten Zeitspanne nach dem Zeitpunkt des Ausfalls keine Bremsregelfunktion ausgelöst wurde.

2. Verfahren nach Anspruch 1, **dadurch gekennzeichnet, dass** es sich bei der Bremsenregelfunktion um eine Antiblockierregelung handelt, wobei nach Erkennen eines Ausfalls der Sensormittel für wenigstens eines der Fahrzeugräder beim Ausführen der Antiblockierregelung, das Fahrzeugrad, für das der Ausfall der Sensormittel erkannt wurde, mit einem vordefinierten Verzögerungsmoment beaufschlagt wird.

3. Verfahren nach Anspruch 1 oder 2, **dadurch gekennzeichnet, dass** bei erkanntem Ausfall der Sensormittel für wenigstens eines der Fahrzeugräder bei Ausführen der Bremsregelfunktion der Gierwinkel des Fahrzeugs überwacht wird, wobei bei Erkennung einer Änderung des Gierwinkels, der nicht einem Lenkbefehl eines Fahrzeugführers entspricht, die Radbremse des Fahrzeugrades, für das der Ausfall der Sensormittel erkannt wurde, zumindest teilweise gelöst wird.

4. Verfahren nach einem der vorherigen Ansprüche, **dadurch gekennzeichnet, dass** die Sensormittel wenigstens einen Raddrehzahlsensor pro Fahrzeugrad umfassen.

5. Verfahren nach einem der vorherigen Ansprüche, **dadurch gekennzeichnet, dass** die Dauer der definierten Zeitspanne zwischen 1 und 30 Sekunden, insbesondere zwischen 1 und 5 Sekunden, insbesondere 2,5 Sekunden beträgt.

6. Verfahren nach einem der vorherigen Ansprüche, **dadurch gekennzeichnet, dass** bei erkanntem Ausfall der Sensormittel für wenigstens eines der Fahrzeugräder eine optische und/oder akustische Warnung an einen Fahrzeugführer ausgegeben wird.

## Claims

1. Method for controlling a brake system of a vehicle, wherein the brake system has at least one wheel brake per vehicle wheel, wherein sensor means for determining wheel speeds of the vehicle wheels are provided for the wheel brakes, and wherein the brake system is designed to execute brake control functions on the basis of the wheel speeds determined by the sensor means, wherein the method has the following steps:
• detecting (102) a failure of the sensor means for at least one of the vehicle wheels,
• checking (106) whether a brake control function is being executed by the brake system at the time of the failure,
• if a brake control function is being executed by the brake system at the time of the failure, continuing (108) the brake control function and deactivating (112) the brake control function when the execution of the brake control function has been completed,
• if no brake control function is being executed by the brake system at the time of the failure, checking (114) whether a brake control function is initiated within a defined period of time after the time of the failure,
• if a brake control function is initiated within the defined period of time after the time of the failure, (116) executing the brake control function, and
• deactivating (112) the brake control function when the execution of the brake control function has been completed and the period of time has expired or if no brake control function has been initiated within the defined period of time after the time of the failure.

2. Method according to Claim 1, **characterized in that** the brake control function is an antilock control process, wherein, after the detection of a failure of the sensor means for at least one of the vehicle wheels in executing the antilock control process, the vehicle wheel for which the failure of the sensor means has been detected is supplied with a predefined deceleration torque.

3. Method according to Claim 1 or 2, **characterized in that**, if a failure of the sensor means for at least one of the vehicle wheels has been detected in executing the brake control function, the yaw angle of the vehicle is monitored, wherein, if a change in the yaw angle that does not correspond to a steering command of a vehicle driver is detected, the wheel brake of the vehicle wheel for which the failure of the sensor means has been detected is at least partially released.

4. Method according to any of the preceding claims, **characterized in that** the sensor means comprise at least one wheel speed sensor per vehicle wheel.

5. Method according to any of the preceding claims, **characterized in that** the duration of the defined period of time is between 1 and 30 seconds, in particular between 1 and 5 seconds, in particular 2.5 seconds.

6. Method according to any of the preceding claims, **characterized in that**, if a failure of the sensor means for at least one of the vehicle wheels is detected, an optical and/or acoustic warning is output to a vehicle driver.

## Revendications

1. Procédé de commande d'un système de freinage d'un véhicule, le système de freinage comportant au moins un frein de roue pour chaque roue du véhicule, des moyens de détection étant prévus pour les freins de roue afin de déterminer des vitesses de rotation de roue des roues de véhicule, et le système de freinage étant conçu pour exécuter des fonctions de régulation de freinage sur la base des vitesses de rotation de roue déterminées par les moyens de détection, le procédé comprenant les étapes suivantes :
• détecter (102) une défaillance des moyens de détection pour au moins une des roues du véhicule,
• vérifier (106) si une fonction de régulation de freinage est exécutée par le système de freinage au moment de la défaillance,
• si une fonction de régulation de freinage est exécutée par le système de freinage au moment de la défaillance, poursuivre (108) la fonction de régulation de freinage et désactiver (112) la fonction de régulation de freinage lorsque l'exécution de la fonction de régulation de freinage est terminée,
• si aucune fonction de régulation de freinage n'est exécutée par le système de freinage au moment de la défaillance, vérifier (114) si une fonction de régulation de freinage est déclenchée dans un délai défini après le moment de la défaillance,
• si une fonction de commande de freinage est déclenchée dans l'intervalle de temps défini après le moment de la défaillance, exécuter (116) la fonction de régulation de freinage et
• désactiver (112) la fonction de régulation du freinage lorsque l'exécution de la fonction de régulation du freinage est terminée et que la période de temps s'est écoulée, ou lorsqu'aucune fonction de régulation du freinage n'a été déclenchée dans la période de temps définie après le moment de la défaillance.

2. Procédé selon la revendication 1, **caractérisé en ce que** la fonction de régulation du freinage est une régulation antiblocage, et **en ce qu'**après détection d'une défaillance des moyens de détection pour au moins une des roues du véhicule lors de l'exécution de la régulation antiblocage, la roue du véhicule, pour laquelle la défaillance des moyens de détection a été détectée, est soumise à un couple de décélération prédéfini.

3. Procédé selon la revendication 1 ou 2, **caractérisé en ce que**, en cas de défaillance détectée des moyens de détection pour au moins l'une des roues du véhicule, l'angle de lacet du véhicule est surveillé lors de l'exécution de la fonction de régulation du freinage, le frein de roue de la roue du véhicule pour laquelle la défaillance des moyens de détection a été détectée étant desserré au moins partiellement en cas de détection d'une modification de l'angle de lacet qui ne correspond pas à une commande de direction d'un conducteur du véhicule.

4. Procédé selon l'une des revendications précédentes, **caractérisé en ce que** les moyens de détection comprennent au moins un capteur de vitesse de roue par roue du véhicule.

5. Procédé selon l'une des revendications précédentes, **caractérisé en ce que** la durée de l'intervalle de temps défini est comprise entre 1 et 30 secondes, en particulier entre 1 et 5 secondes, notamment 2,5 secondes.

6. Procédé selon l'une des revendications précédentes, **caractérisé en ce que**, en cas de défaillance détectée des moyens de détection pour au moins l'une des roues du véhicule, un avertissement optique et/ou acoustique est émis à destination d'un conducteur du véhicule.
